# EUROPEAN PATENT APPLICATION

(11) **EP 2 811 156 A1**
(43) Date of publication of application: **10.12.2014**
(21) Application number: 13171055.0
(22) Date of filing: 07.06.2013
(51) Int. Cl.: F03D 1/06

(54) **Wind turbine rotor blade**

(71) Applicant: Siemens Aktiengesellschaft, 80333 München (DE)
(72) Inventor: Schibsbye, Karsten, 7000 Fredericia (DK)

(57) **Abstract**

The invention relates to a wind turbine rotor blade (20) comprising a leading edge (23), a trailing edge (40) and a rotor blade main body (22). The rotor blade main body (22) is connected with the leading edge (23) and the trailing edge (40). Furthermore, the trailing edge (40) comprises a trailing edge base section (41) and a separate trailing edge extension piece (42). The trailing edge base section (41) and the trailing edge extension piece (42) are connected with each other. The invention furthermore relates to a method of manufacturing such a wind turbine rotor blade (20) with a separate trailing edge extension piece (42).

## Description

The present invention relates to a wind turbine rotor blade with an improved trailing edge. Furthermore, the invention relates to a method of manufacturing such a wind turbine rotor blade.

### Background of the invention

Wind turbine rotor blades may be manufactured by an integral manufacturing process. The integral manufacturing process involves arranging a fiber material, e.g. a plurality of fiber mats, into a mould. Subsequently, a filling material, in particular a liquid filling material such as epoxy resin, may be funneled into the mould. Finally, the material is cured and a wind turbine rotor blade made of cured composite material is obtained.

It is advantageous to use a vacuum technology, e.g. vacuum assisted resin transfer molding (VARTM), during the step of funneling the filling material into the mold. To obtain a cavity, i.e. a void or a cavern, inside the wind turbine rotor blade, inner vacuum bags are used. The inner vacuum bags ensure that the liquid filling material only flows into sections where it is supposed to flow. Beneficially, these sections are at the periphery of the wind turbine rotor blade. After the material is cured the inner vacuum bags have to be removed.

However, the inner vacuum bags are difficult to remove from certain regions such as, for instance, tapered or pointed regions. A trailing edge of a wind turbine rotor blade is such a tapered and pointed region. Regarded from the inside of the wind turbine rotor blade, the trailing edge is a region with a significantly higher curvature of the inner surface of the wind turbine rotor blade compared to other regions, such as a suction side, a pressure side or a leading edge of the wind turbine rotor blade. A common problem which is encountered during manufacturing of a wind turbine rotor blade is thus that an inner vacuum bag is stuck at the inner surface of the trailing edge and that consequently it is hard and complicated to remove the inner vacuum bag.

Thus, there exists an urgent need to provide a wind turbine rotor blade with a construction that facilitates removal of the inner vacuum bag during the rotor blade casting process.

### Summary of the invention

This objective is achieved by the independent claims. The dependent claims describe advantageous developments and modifications of the invention.

In accordance with the invention there is provided a wind turbine rotor blade comprising a leading edge, a trailing edge and a rotor blade main body. The rotor blade main body is connected with the leading edge and the trailing edge. Furthermore, the trailing edge comprises a trailing edge base section and a separate trailing edge extension piece. The trailing edge base section and the trailing edge extension piece are connected with each other.

Advantageously, the separate trailing edge extension piece comprises a part of the trailing edge, which is more tapered or pointed compared to a rest of the trailing edge.

Thus, a first advantage of having a wind turbine rotor blade with a separate trailing edge extension piece is that inner vacuum bags which are laid out in the mould during an integral manufacturing process have not necessarily to reach out until the most tapered regions of the trailing edge. Consequently, removal of the inner vacuum bags after curing the wind turbine rotor blade is easier and can be performed faster compared to the state of the art.

A second advantage of the separate trailing edge extension piece are increased possibilities and options for manufacturing the trailing edge. Additionally, a greater choice of materials are available with a trailing edge extension piece which is manufactured separately. One problem, which is for example encountered commonly in the state of the art, is a difficulty to position a sufficient amount of glass fibers at the trailing edge and ensure that the positioned glass fibers stay in position during vacuum assisted resin transfer molding. In other words, it is complicated to ensure that the glass fibers do not slide away or create wrinkles during manufacturing and processing. These issues can be avoided when using a separate trailing edge extension piece. Additionally, a trailing edge which is reinforced compared to a common trailing edge is possible due to the greater choice of materials and manufacturing possibilities.

A third advantage of the separate trailing edge extension piece is that the trailing edge extension piece can be exchanged. Such an exchange may be performed during servicing and maintaining the wind turbine rotor blade. Thus, a damaged or defective trailing edge can easily be repaired. Yet another advantage of a separate and exchangeable trailing edge extension piece is that the trailing edge extension piece can easily be upgraded. Thus, it may be possible to change a profile or characteristics of the trailing edge by simply exchanging a new trailing edge extension piece with a new profile against an existing trailing edge extension piece.

Advantageously, most or all of the loads, which are exerted on the wind turbine rotor blade, are carried by the trailing edge base section, and only a few or none of the loads are carried by the trailing edge extension piece. Thus, the trailing edge base section may be denoted as the load carrying part and, consequently, the trailing edge extension piece may be denoted as the non-load carrying part.

The trailing edge may comprise a fiber material, in particular a glass fiber material and/or a carbon fiber material. It is also possible that the trailing edge comprises at least one fiber roving, in particular at least one bundle of fiber rovings. Additionally, the bundle of fiber rovings may be wrapped, i.e. enclosed, by a wrapping.

It is advantageous that the fiber material and/or the bundle of fiber rovings are used or applied to reinforce the trailing edge base section. Thus, a strong structure which is able to support the load carrying part of the trailing edge can be achieved.

The trailing edge extension piece may comprise polyurethane, in particular thermoplastic polyurethane.

It is advantageous to precast the trailing edge extension piece and incorporate the precast trailing edge extension piece into the residual wind turbine rotor blade. Furthermore, the trailing edge, in particular the trailing edge base section, may comprise a surface glass fiber material. The surface glass fiber material is beneficially a thin skin made of biax.

In a first embodiment, the trailing edge extension piece and the trailing edge base section are connected by means of a trailing edge connection means.

In an advantageous embodiment, the trailing edge connection means comprises at least one notch and at least one recess. The notch is beneficially suited to fit into the recess.

In a first alternative, the trailing edge base section comprises the notch and the trailing edge extension piece comprises the recess; in a second alternative the trailing edge extension piece comprises the notch and the trailing edge base section comprises the recess. A trailing edge connection means comprising a notch and a recess has the advantage that it enables a connection with a certain stability and durability without any screws, any bolts or any glue.

Beneficially, the trailing edge connection means comprises a shape of a dovetail.

To further increase durability and stability of the connection, the connection means may comprise a plurality of notches and recesses. In an advantageous embodiment, the trailing edge extension piece and the trailing edge base section can reversibly be detached and reconnected, in particular without damaging the trailing edge. In this context, a process which is called "reversible" can be repeated several times under same conditions. Thus, a trailing edge extension piece that can reversibly be detached and reconnected from a trailing edge base section means that the two parts can be released and joined again several times. Advantageously, this happens without damaging one part and/or the other.

A detachable trailing edge extension piece has the advantage that it can easily be replaced, e.g. because of a defect or because another trailing edge connection piece is desired. A trailing edge connection means with a shape of a dovetail is very well suited for a reversible trailing edge connection.

The trailing edge connection means may comprise curves, i.e. round shapes, and/or edges. The notch may, for example, comprise a shape of three quarter of a circle.

In another embodiment, the trailing edge extension piece and the trailing edge base section are durably attached to each other by an adhesive.

Particularly for a wind turbine it is highly important that all components and parts of the wind turbine are safe during operation. In this context, "being safe" means that no parts of the wind turbine are allowed to loosen or be detached from the residual wind turbine. Thus, it may be advantageous if the trailing edge extension piece and the trailing edge base section are durably joined with each other by an adhesive, e.g. by a glue.

In an advantageous embodiment, the trailing edge extension piece extends from a shoulder of the wind turbine rotor blade to a tip portion of the wind turbine rotor blade.

A wind turbine rotor blade comprises the tip portion and a root portion. A virtual axis which extends from the tip portion to the root portion is denoted as a rotor blade longitudinal axis. The shoulder of the wind turbine rotor blade is a section of the trailing edge where a lateral extension of the wind turbine rotor blade comprises a maximum, the lateral extension being defined as a distance from the leading edge to the trailing edge being measured perpendicular to the rotor blade longitudinal axis.

Advantageously, the trailing edge extension piece extends along the whole trailing edge from the shoulder to the tip portion.

In another embodiment, the trailing edge base section comprises a plurality of trailing edge base section segments and/or the trailing edge extension piece comprises a plurality of trailing edge extension piece segments.

The trailing edge extension piece may be manufactured in one single piece, i.e. it may be monolithic. This preferably leads to a strong structure which is able to support a high load being exerted to the trailing edge. In other words, a monolithic trailing edge extension piece may ensure a maximal strength of the trailing edge.

However, it may also be advantageous to segment the trailing edge extension piece in order to ensure an easy and fast manufacturing process of the trailing edge extension piece. So, the trailing edge base section may also be segmented. This is particularly advantageous for an easy and fast lay out of glass fiber material in the mould before casting.

In an advantageous embodiment, the trailing edge base section and/or the trailing edge extension piece is segmented substantially perpendicularly to the rotor blade longitudinal axis.

In this context, the notion substantially includes deviations of up to 20 degree, in particular of up to 10 degree, between segmentation and the rotor blade longitudinal axis.

In another embodiment, the trailing edge extension piece comprises polyurethane, in particular thermoplastic polyurethane.

Polyurethane is a preferred material choice for the trailing edge extension piece, because polyurethane is easily accessible, relatively inexpensive and relatively easy to manufacture. Additionally, polyurethane enables to process or manufacture a durable and robust trailing edge extension piece.

In an advantageous embodiment, the trailing edge extension piece comprises a serrated panel topology and/or a brush topology.

The serrated panel topology is also referred to as a dinotail topology. Both, the serrated panel topology and the brush topology may have the effect of reducing noise of the wind turbine rotor blade during operation, i.e. during rotation of the wind turbine rotor blade about the axis of rotation.

In another embodiment, the trailing edge extension piece comprises a section which changes passively in response to speed and angle of an airflow affecting the trailing edge.

Such a section is also denoted as a flap topology. Advantageously, this section is flexible. If the wind turbine rotor blade is a part of a wind turbine rotor, the serrated panel topology, the brush topology and the flap topology may also increase efficiency of the wind turbine rotor.

The invention is also related to a method of manufacturing a wind turbine rotor blade, wherein the method comprises the following steps:
a) providing a rotor blade main part comprising a leading edge, a rotor blade main body and a trailing edge base section,
b) providing a separate trailing edge extension piece, and
c) connecting the rotor blade main part and the trailing edge extension piece such that a trailing edge of the wind turbine rotor blade is built.

Thus, the rotor blade main part and the trailing edge extension piece are advantageously manufactured separately. In other words, the trailing edge extension piece in step b) is a precast trailing edge extension piece.

In an advantageous embodiment, the method comprises the following further step:
m) casting the rotor blade main part by means of Vacuum Assisted Resin Transfer Molding.

Vacuum Assisted Resin Transfer Moulding (VARTM) is a process of vacuum infusion, where a composite is molded using a rigid mould and an outer atmospheric pressure compressing a fiber tightly against the rigid mould surface. Advantageously, the rotor blade main part including the trailing edge base section is casted by VARTM.

The aspects defined above and further aspects of the present invention are apparent from the examples of embodiments to be described hereinafter and are explained with reference to the examples of embodiment.

### Brief description of the Figures

Embodiments of the invention are now described, by way of example only, with reference to the accompanying figures, of which:
Figure 1 shows a wind turbine;
Figure 2 shows a wind turbine rotor blade;
Figure 3 shows a wind turbine rotor blade with a trailing edge extension piece in a perspective view;
Figure 4 shows a bundle of fiber rovings with a wrapping;
Figure 5 shows a segmented trailing edge base section and a segmented trailing edge extension piece;
Figure 6 shows a first topology of the trailing edge extension piece;
Figure 7 shows a second topology of the trailing edge extension piece;
Figure 8 shows a third topology of a trailing edge extension piece;
Figure 9 shows a serrated panel topology of a trailing edge extension piece in a perspective view;
Figure 10 shows a first embodiment of a trailing edge connection means with a shape of a dovetail; and
Figure 11 shows a second embodiment of a trailing edge connection means.

The illustration in the figures is schematical.

### Detailed description of the Figures

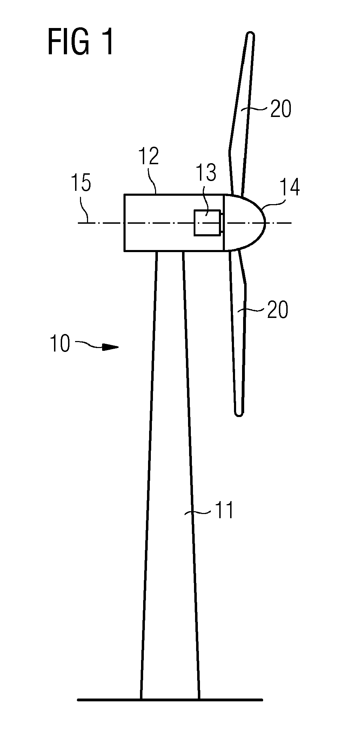

Referring to Figure 1, a wind turbine 10 comprising a tower 11 and a nacelle 12 is shown. The nacelle 12 is rotatably mounted about a vertical yaw axis of rotation. Additionally, the wind turbine 10 comprises a hub 14 where three wind turbine rotor blades 20 are attached (two wind turbine rotor blades 20 are shown in Figure 1). The hub 14 is rotatably mounted to the nacelle 12. Rotation of the hub 14 is about an axis of rotation 15. Furthermore, the wind turbine 10 comprises a generator 13 which converts rotational energy into electrical energy.

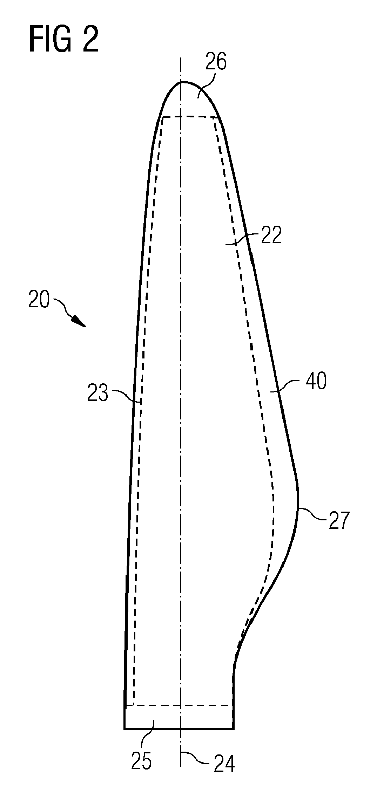

Figure 2 shows a wind turbine rotor blade 20. The wind turbine rotor blade 20 is divided into a rotor blade main body 22, a leading edge 23, a trailing edge 40, a root portion 25 and a tip portion 26. A rotor blade longitudinal axis 24 extends from the root portion 25 to the tip portion 26. Furthermore, the trailing edge 40 comprises a shoulder 27. The shoulder 27 is characterized by a position on the trailing edge 40 which features a maximum lateral extension of the wind turbine rotor blade 20, the lateral extension being measured perpendicular to the rotor blade longitudinal axis 24. The trailing edge 40 is further subdivided into a trailing edge base section and a trailing edge extension piece (not shown in Figure 2). The wind turbine rotor blade 20 in Figure 2 features a length of 7 m (metre), measured along the rotor blade longitudinal axis 24.

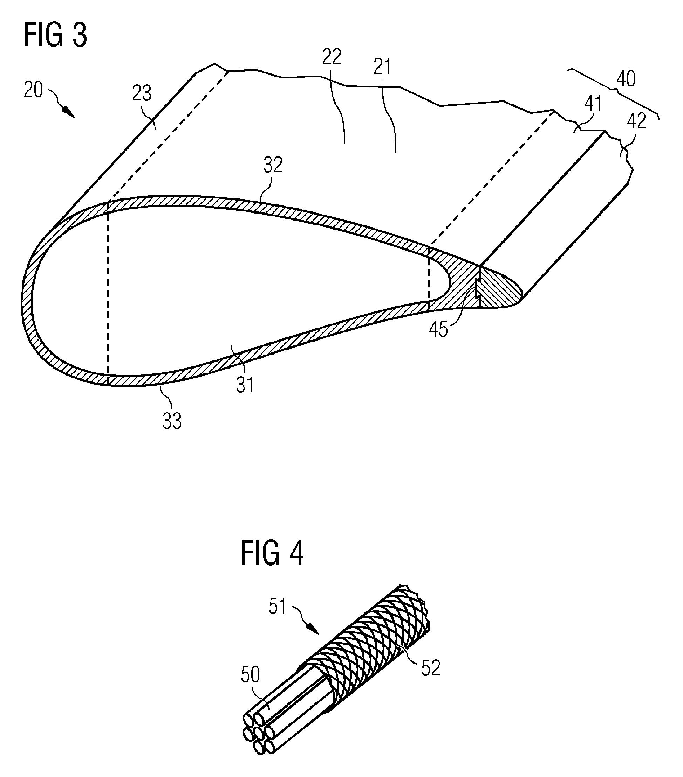

Referring to Figure 3, a wind turbine rotor blade 20 in a perspective view is shown. As can be seen, an inside 31 of the wind turbine rotor blade 20 is void. In other words, the wind turbine rotor blade 20 is hollow inside. The wind turbine rotor blade 20 comprises a relatively thin outer skin. The wind turbine rotor blade 20 comprises furthermore a suction side 32, a pressure side 33 and a leading edge 23. As can be seen, the leading edge 23 is not an edge in a mathematical sense, i.e. it does not comprise just a two-dimensional line; the leading edge 23 has rather be understood as a section of the wind turbine rotor blade 20. Analogously, this applies to the trailing edge 40 which denotes a certain section or area of the wind turbine rotor blade 20. The wind turbine rotor blade 20 in Figure 3 comprises a trailing edge base section 41 which is connected by a trailing edge connection means 45 with a trailing edge extension piece 42. The leading edge 23 and the trailing edge 40 are connected by a rotor blade main body 22. The rotor blade main body 22 has not to be confused with a rotor blade main part 21 which comprises the rotor blade main body 22, the leading edge 23 and the trailing edge base section 41. In other words, the rotor blade main part 21 comprises the whole wind turbine rotor blade 20 except the trailing edge extension piece 42.

Figure 4 shows a bundle of fiber rovings 51 as it may preferably be used for reinforcing a trailing edge base section 41 (not shown). The bundle of fiber rovings 51 comprises a plurality of fiber rovings 50. Furthermore these fiber rovings 50 are wrapped with a tight wrapping 52. The fiber rovings 50 comprise glass fiber material. If used as a reinforcement of the trailing edge base section 41, unidirectional glass fibers are preferably used.

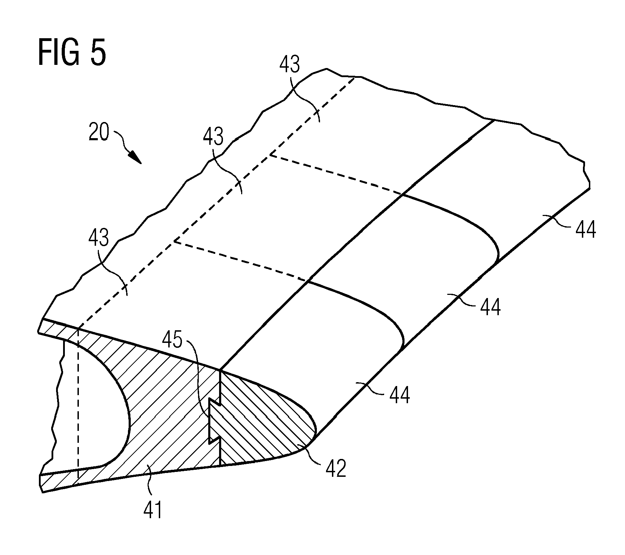

Referring to Figure 5, a segmented wind turbine rotor blade 20 is shown. Both, a trailing edge base section 41 and a trailing edge extension piece 42, are segmented. The trailing edge base section 41 comprises a plurality of trailing edge base section segments 43. Segmentation of the trailing edge base section 41 is done perpendicularly to a rotor blade longitudinal axis 24 (not shown). Analogously, the trailing edge extension piece 42 comprises a plurality of trailing edge extension piece segments 44. The trailing edge extension piece 42 is also segmented perpendicularly to the rotor blade longitudinal axis 24 and segmentation of the trailing edge base section 41 and the trailing edge extension piece 42 are aligned to each other. A length of the trailing edge base section segment 43 and a length of the trailing edge extension piece segment 44 along the rotor blade longitudinal axis 24 is 7 m each. An advantage of the segmentation is an easier manufacturing and handling compared to a monolithic trailing edge extension piece 42 or a monolithic trailing edge base section 41, respectively.

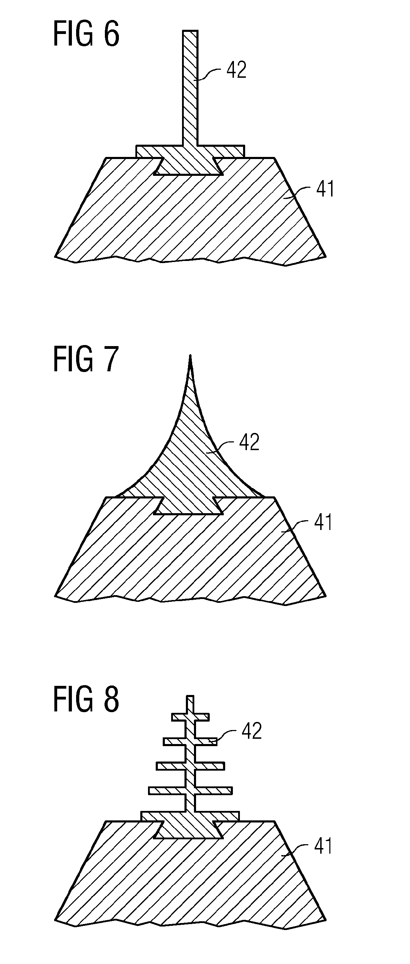

Figures 6 to 8 show different topologies for a trailing edge extension piece 42 which is connected to a trailing edge base section 41. Each of a maximum vertical dimension of the trailing edge extension pieces 42 are in a range between 4 cm (centimetre) and 10 cm.

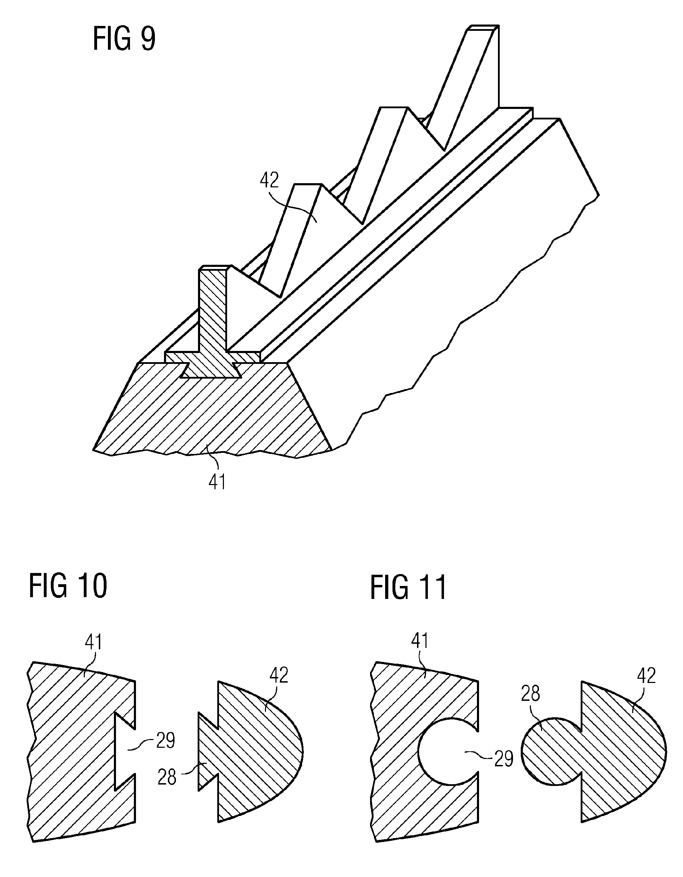

Figure 9 shows a perspective view of a trailing edge extension piece 42 connected with a trailing edge base section 41. The trailing edge extension piece 42 features a topology which is referred to as a serrated panel topology or simply as a diontail topology. An advantage of the serrated panel topology is reducing noise and enhancing power if the wind turbine rotor blade 20 forms part of a wind turbine 10 and the wind turbine rotor blade 20 rotates about the axis of rotation 15.

Finally, Figures 10 and 11 show two embodiments of a trailing edge connection means 45.

Figure 10 shows a trailing edge connection means 45 which comprises a dovetail shape. The notion "dovetail" refers to the shape of the notch 28 and the recess 29 of the trailing edge connection means 45. The shape of the notch 28 and the recess 29 are such that the trailing edge connection means 45 holds the trailing edge base section 41 and the trailing edge extension piece 42 together, in particular if a force is exerted perpendicularly to the segmentation of the trailing edge base section 41 and the trailing edge extension piece 42. In other words, the connection may be released or loosened if a force in a first direction is exerted, but holds tightly if a second force in a direction perpendicular to the first force is exerted.

Alternatively, the trailing edge connection means 45 may also comprise a plurality of notches 28 and recesses 29 in order to reinforce the connection.

Figure 11 shows another embodiment of the trailing edge connection means 45. In this embodiment, the notch 28 comprises a shape of a circle.

## Claims

1. Wind turbine rotor blade (20),
wherein
- the wind turbine rotor blade (20) comprises a leading edge (23), a trailing edge (40) and a rotor blade main body (22), the rotor blade main body (22) being connected with the leading edge (23) and the trailing edge (40),
- the trailing edge (40) comprises a trailing edge base section (41) and a separate trailing edge extension piece (42), and
- the trailing edge base section (41) and the trailing edge extension piece (42) are connected with each other.

2. Wind turbine rotor blade (20) according to claim 1, wherein the trailing edge extension piece (42) and the trailing edge base section (41) are connected by means of a trailing edge connection means (45).

3. Wind turbine rotor blade (20) according to claim 2, wherein
- the trailing edge connection means (45) comprises at least one notch (28) and at least one recess (29), and
- the notch (28) is suited to fit into the recess (29).

4. Wind turbine rotor blade (20) according to one of the claims 2 or 3,
wherein the trailing edge connection means (45) comprises a shape of a dovetail.

5. Wind turbine rotor blade (20) according to one of the preceding claims,
wherein the trailing edge extension piece (42) and the trailing edge base section (41) can reversibly be detached and reconnected, in particular without damaging the trailing edge (40).

6. Wind turbine rotor blade (20) according to one of the claims 1 to 4,
wherein the trailing edge extension piece (42) and the trailing edge base section (41) are durably attached to each other by an adhesive.

7. Wind turbine rotor blade (20) according to one of the preceding claims,
wherein the trailing edge extension piece (42) extends from a shoulder (27) of the wind turbine rotor blade (20) to a tip portion (26) of the wind turbine rotor blade (20).

8. Wind turbine rotor blade (20) according to one of the preceding claims,
wherein the trailing edge base section (41) comprises a plurality of trailing edge base section segments (43) and/or the trailing edge extension piece (42) comprises a plurality of trailing edge extension piece segments (44).

9. Wind turbine rotor blade (20) according to one of the preceding claims,
wherein the trailing edge extension piece (42) comprises polyurethane, in particular thermoplastic polyurethane.

10. Wind turbine rotor blade (20) according to one of the preceding claims,
wherein the trailing edge extension piece (42) comprises a serrated panel topology and/or a brush topology.

11. Wind turbine rotor blade (20) according to one of the preceding claims,
wherein the trailing edge extension piece (42) comprises a section which changes passively in response to speed and angle of an air flow affecting the trailing edge (40).

12. Method of manufacturing a wind turbine rotor blade (20), wherein the method comprises the following steps:
a) providing a rotor blade main part (21) comprising a leading edge (23), a rotor blade main body (22) and a trailing edge base section (41),
b) providing a separate trailing edge extension piece (42), and
c) connecting the rotor blade main part (21) and the trailing edge extension piece (42) such that a trailing edge (40) of the wind turbine rotor blade (20) is built.

13. Method according to claim 12,
wherein the trailing edge extension piece (42) in step b) is a precast trailing edge extension piece (42).

14. Method according to one of the claims 12 or 13,
wherein the method comprises the following further step:
m) casting the rotor blade main part (21) by means of Vacuum Assisted Resin Transfer Moulding.
